# EUROPÄISCHE PATENTSCHRIFT

(11) **EP 3 865 772 B1**
(45) Veröffentlichungstag und Bekanntmachung des Hinweises auf die Patenterteilung: **10.08.2022**
(21) Anmeldenummer: 21157306.8
(22) Anmeldetag: 16.02.2021
(51) Int. Cl.: F23K 3/00, B65G 69/04

(54) **VORRICHTUNG ZUM BEFÜLLEN EINES LAGERRAUMES MIT STÜCKELIGEM BRENNSTOFF**
DEVICE FOR FILLING A STORAGE AREA WITH PIECE FUEL
DISPOSITIF DE REMPLISSAGE D'UN ENTREPÔT D'UN COMBUSTIBLE GRANULÉ

(30) Priorität: 17.02.2020 AT 5003120 U
(43) Veröffentlichungstag der Anmeldung: 18.08.2021
(73) Patentinhaber: Hargassner Ges mbH, 4952 Weng/Innkreis (AT)
(72) Erfinder: Markus, Hargassner, 4952 Weng im Innkreis (AT)
(74) Vertreter: Hübscher & Partner Patentanwälte GmbH

(56) Entgegenhaltungen:
- EP-A1- 2 592 024
- AT-A1- 506 767
- CN-A- 110 542 114
- DE-A1- 2 703 329
- FR-A- 731 773

## Beschreibung

Die Erfindung bezieht sich auf eine Vorrichtung zum Befüllen eines Lagerraumes mit stückeligem Brennstoff mit einer in den Lagerraum mündenden, außerhalb des Lagerraumes durch einen Motor antreibbaren, horizontalen Förderschnecke und mit einem innerhalb des Lagerraumes angeordneten Schleuderteller.

Aus der AT506464B1 ist eine Vorrichtung zum Befüllen eines Lagerraumes mit stückeligem Brennstoff, wie Pellets oder Hackgut, bekannt. Die Vorrichtung weist hierzu eine von einem außerhalb des Lagerraumes angeordneten Motor angetriebene horizontale Förderschnecke auf, welche Brennstoff von einer Aufgabeschurre zu einer im Lagerraum angeordneten, vertikalen Förderschnecke fördert. Am Austrittsende der vertikalen Förderschnecke ist ein Schleuderteller vorgesehen, der den von der vertikalen Förderschnecke aufgenommenen Brennstoff im Lagerraum verteilt. Zum Antrieb der vertikalen Förderschnecke und des Schleudertellers ist im Lagerraum ein Antriebsmotor vorgesehen. Nachteilig daran ist, dass diese Konstruktion eine Mindesthöhe des Lagerraumes verlangt und einen verhältnismäßig komplexen Aufbau aufweist. Darüber hinaus ist der im Lagerraum angeordnete Antriebsmotor schwer zugänglich für etwaige Wartungsarbeiten und kann im Störfall zu Zündungen von explosiven Staub- und Luftgemischen führen. Eine gattungsgemäße Vorrichtung zum Befüllen eines Lagerraums mit stückeligem Brennstoff ist aus AT 506 767 A1 bekannt.

Der Erfindung liegt somit die Aufgabe zugrunde, eine Vorrichtung der eingangs geschilderten Art vorzuschlagen, welche unabhängig von der Dimension des Lagerraumes eine einfache Montage bzw. Wartung erlaubt und gleichzeitig das Sicherheitsrisiko beim Befüllvorgang herabsetzt.

Die Erfindung löst die gestellte Aufgabe dadurch, dass der Schleuderteller über ein Winkelgetriebe mit der Schneckenwelle antriebsverbunden ist.

Zufolge dieser Maßnahme kann der für die horizontale Förderschnecke vorgesehene, außerhalb des Lagerraumes angeordnete Antriebsmotor zum Antrieb des Schleudertellers verwendet werden. Hierfür ist lediglich ein Winkelgetriebe zwischen der Schneckenwelle und dem Schleuderteller notwendig. Mithilfe dieses Winkelgetriebes kann auch die für den Antrieb des Schleudertellers erforderliche Übersetzung der Drehzahl sichergestellt werden. Da der Antriebsmotor außerhalb des Lagerraumes angeordnet ist, ist er nicht nur für Wartungsarbeiten einfach zugänglich, sondern stellt auch im Störungsfall kein Sicherheitsrisiko für den Lagerraum dar. Der stückelige Brennstoff wird durch den mit einer entsprechenden Drehzahl angetriebenen Schleuderteller radial nach außen gegen die Wände des Lagerraumes geschleudert, sodass sich innerhalb des Lagerraumes eine von den Wänden gegen die Lagerraummitte hin abfallende Schüttung aus dem stückeligem Brennstoff ergibt. Dieser Füllvorgang stellt eine weitgehend gleichmäßige Füllung des Lagerraumes bis in den Deckenbereich sicher.

Eine besonders einfache Montage der Vorrichtung ergibt sich, wenn der Schleuderteller mit dem Gehäuse der Förderschnecke eine an der Decke des Lagerraumes befestigbare Baueinheit bildet. Zu diesem Zweck muss der Lagerraum lediglich mit einer Durchtrittsöffnung versehen werden, durch welche die horizontale Förderschnecke durchgeführt ist, um sie außerhalb des Lagerraumes an eine Aufgabeschurre anschließen zu können. Vorteilhafte Montagebedingungen ergeben sich, wenn die Baueinheit mit Hilfe wenigstens einer das Gehäuse umschließenden Schelle an der Decke des Lagerraumes befestigt wird. Solche Befestigungsschelle haben unter anderem den Vorteil, dass die axiale Lage des Gehäuses gegenüber der Schelle eingestellt werden kann, weil für den Schellenangriff keine konstruktiven Maßnahmen am Gehäuse erforderlich sind.

Wie bereits ausgeführt wurde, ergibt sich beim Füllen des Lagerraumes mit stückeligem Brennstoff eine Brennstoffablagerung, die einen von den Lagerraumwänden zur Lagerraummitte abfallenden Krater ausbildet. Die somit von den Wänden des Lagerraumes ausgehende Befüllung kann in einfacher Art durch zwei am Gehäuse der Förderschnecke angeordnete Füllstandsensoren überwacht werden, wenn einer dieser Füllstandsensoren im Bereich einer Lagerraumwand und der andere im Bereich des Schleudertellers angebracht ist. Spricht der wandseitige Füllstandsensor aufgrund der von den Wänden des Lagerraumes ausgehenden Befüllung an, so kann über das Steuersignal dieses Füllstandsensors die Zufuhr des Brennstoffs zur Aufgabeschurre unterbrochen werden, um eine Überfüllung des Lagerraumes zu unterbinden. Es kann daher nur mehr die Aufgabeschurre in den Lagerraum entleert werden, wobei der zweite Füllstandsensor im Bereich des Schleudertellers für ein Abschalten der Förderschnecke und damit des Antriebs des Schleudertellers sorgt, wenn der maximale Füllstand im Lagerraum erreicht ist.

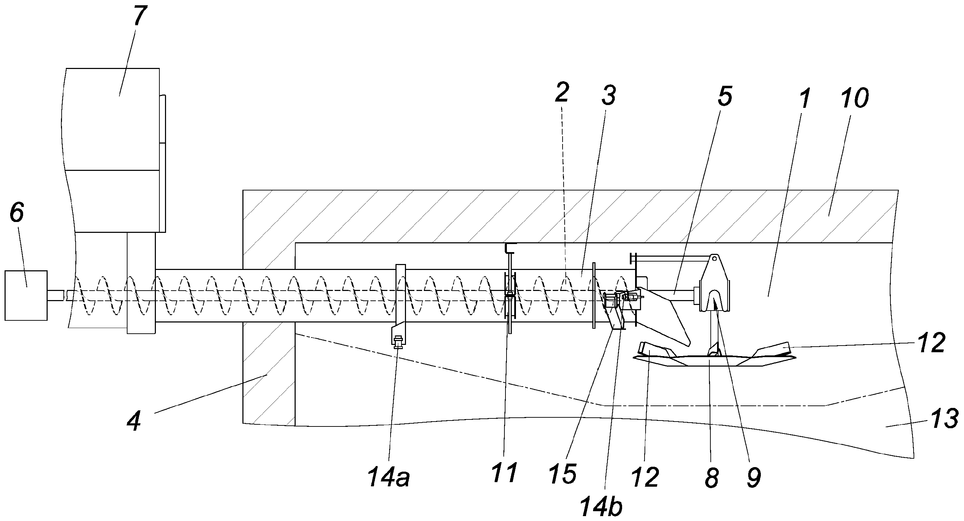

In der Zeichnung ist der Erfindungsgegenstand beispielsweise dargestellt, und zwar wird eine in einem Lagerraum angeordnete erfindungsgemäße Vorrichtung zum Befüllen des Lagerraums mit stückeligem Brennstoff in einer vereinfachten Seitenansicht gezeigt.

Eine erfindungsgemäße Vorrichtung zum Befüllen eines Lagerraumes 1 mit stückeligem Brennstoff weist eine horizontale Förderschnecke 2 auf, deren Gehäuse 3 eine Wand 4 des Lagerraumes 1 durchsetzt. Die Schneckenwelle 5 wird durch einen außerhalb des Lagerraumes 1 angeordneten Motor 6 angetrieben. Außerhalb des Lagerraumes 1 wird die Förderschnecke 2 über eine Aufgabeschurre 7 mit stückeligem Brennstoff, z.B. Hackschnitzel, beschickt. Am Abwurfende der Förderschnecke 2 ist ein Schleuderteller 8 vorgesehen, der durch die Schneckenwelle 5 über ein Winkelgetriebe 9 angetrieben wird.

Der Schleuderteller 8 bildet mit dem Gehäuse 3 der Förderschnecke 2 eine Baueinheit, die an der Decke 10 des Lagerraumes 1 befestigt ist. Zu diesem Zweck kann vorteilhaft zumindest eine das Gehäuse 3 umschließende Schelle 11 vorgesehen sein, die an der Decke 10 aufgehängt ist.

Der der Aufgabeschurre 7 aufgegebene stückelige Brennstoff wird durch die vom Motor 6 angetriebene Förderschnecke 2 im Deckenbereich in den Lagerraum 1 gefördert, fällt auf den Schleuderteller 8 und wird durch den Schleuderteller 8 gegen die Wände des Lagerraumes 1 geschleudert. Der Schleuderteller 8 ist zur Brennstoffmitnahme mit Schleuderstegen 12 versehen. Aufgrund des Einsatzes des Schleudertellers 8 wird der stückelige Brennstoff zunächst im Bereich der Wände des Lagerraumes 1 abgelagert und bildet einen Gutstock 13, der gegen die Mitte des Lagerraumes 1 abfällt. Das von den Wänden des Lagerraumes 1 ausgehende Anwachsen des Gutstockes 13 stellt eine Voraussetzung dar, den Lagerraum 1 weitgehend gleichmäßig bis in den Deckenbereich mit stückeligem Brennstoff zu füllen.

Zur Überwachung des Füllvorgangs sind zwei Füllstandsensoren 14a, 14b entlang des Gehäuses 3 der Förderschnecke 2 vorgesehen, wobei ein Füllstandsensor 14a im Bereich der Lagerraumwand 4 und der andere Füllstandsensor 14b im Bereich des Abwurfendes der Förderschnecke 2 angeordnet sind. Wie sich aus der Zeichnung unmittelbar ergibt, spricht aufgrund der gegen die Lagerraummitte abfallenden Oberfläche des Gutstockes 13 zunächst der wandseitige Füllstandsensor 14a an, bevor der Füllstandsensor 14b betätigt wird, wenn der Gutstock 13 weiter anwächst. Der wandseitige Füllstandsensor 14a kann somit über ein Steuersignal die Zufuhr des Brennstoffes zur Aufgabeschurre 7 unterbrechen, wodurch nur mehr die Aufgabeschurre 7 in den Lagerraum 1 entleert und eine Überfüllung des Lagerraumes 1 verhindert werden kann. Der im Bereich des Schleudertellers 8 angeordnete Füllstandsensor 14b kann den Motor 6 und damit die Förderschnecke 2 und den Schleuderteller 8 abschalten. Dadurch wird eine Förderung von etwaigem noch im Gehäuse 3 der Förderschnecke 2 befindlichen Brennstoff unterbunden.

Die Füllstandsensoren 14a, 14b können beispielsweise optische Sensoren sein, oder aber Sensoren, welche mit einer Hebeklappe 15 derart wirkverbunden sind, dass die Sensoren bei einem Anheben der Hebeklappe 15 über einen bestimmten Schwellenwert ansprechen.

## Patentansprüche

1. Vorrichtung zum Befüllen eines Lagerraumes (1) mit stückeligem Brennstoff mit einer in den Lagerraum (1) mündenden, außerhalb des Lagerraumes (1) durch einen Motor (6) antreibbaren, horizontalen Förderschnecke (2) und mit einem innerhalb des Lagerraumes (1) anordenbaren Schleuderteller (8; wobei der Schleuderteller (8) unterhalb des Abwurfendes (6) der Förderschnecke (2) vorgesehen ist, **dadurch gekennzeichnet, dass** der Schleuderteller (8) über ein Winkelgetriebe (9) mit der Schneckenwelle (5) antriebsverbunden ist.

2. Vorrichtung nach Anspruch 1, **dadurch gekennzeichnet, dass** der Schleuderteller (8) mit dem Gehäuse (3) der Förderschnecke (2) eine an der Decke (10) des Lagerraumes (1) befestigbare Baueinheit bildet.

3. Vorrichtung nach Anspruch 2, **dadurch gekennzeichnet, dass** die Baueinheit mit Hilfe wenigstens einer das Gehäuse (3) umschließenden Schelle (11) an der Decke (10) des Lagerraumes (1) befestigbar ist.

4. Vorrichtung nach einem der Ansprüche 1 bis 3, **dadurch gekennzeichnet, dass** am Gehäuse (3) der Förderschnecke (2) zwei Füllstandsensoren (14a, 14b) vorgesehen sind, wobei ein erster Füllstandsensor (14a) im Bereich einer Lagerraumwand anordenbar ist und ein zweiter Füllstandsensor (14b) im Bereich des Schleudertellers (8) angeordnet ist.

## Claims

1. Device for filling a storage room (1) with lump fuel having a horizontal worm conveyor (2) which issues into the storage room (1) and can be driven by a motor (6) outside of the storage room (1), and having a centrifugal plate (8) which can be arranged within the storage room (1), wherein the centrifugal plate (8) is provided beneath the discharge end (6) of the worm conveyor (2), **characterised in that** the centrifugal plate (8) is drivingly connected to the worm shaft (5) via an angular gear (9).

2. Device as claimed in claim 1, **characterised in that** the centrifugal plate (8) forms, with the housing (3) of the worm conveyor (2), a structural unit which can be attached to the ceiling (10) of the storage room (1).

3. Device as claimed in claim 2, **characterised in that** the structural unit can be attached to the ceiling (10) of the storage room (1) using at least one bracket (11) clasping around the housing (3).

4. Device as claimed in any one of claims 1 to 3, **characterised in that** two filling level sensors (14a, 14b) are provided on the housing (3) of the worm conveyor (2), wherein a first filling level sensor (14a) can be arranged in the region of a storage room wall and a second filling level sensor (14b) is arranged in the region of the centrifugal plate (8).

## Revendications

1. Dispositif pour remplir un espace de stockage (1) de combustible granulé avec un convoyeur à vis (2) horizontal situé à l'extérieur de l'espace de stockage (1), débouchant dans l'espace de stockage (1) et pouvant être entraîné par un moteur (6), et avec un plateau de centrifugation (8) pouvant être disposé à l'intérieur de l'espace de stockage (1), le plateau de centrifugation (8) étant prévu au-dessous de l'extrémité de déchargement (6) du convoyeur à vis (2), **caractérisé en ce que** le plateau de centrifugation (8) est relié en entraînement par un engrenage angulaire (9) avec l'axe de la vis (5).

2. Dispositif selon la revendication 1, **caractérisé en ce que** le plateau de centrifugation (8) forme avec l'enveloppe (3) du convoyeur à vis (2) une unité constructive pouvant être fixée au couvercle (10) de l'espace de stockage (1).

3. Dispositif selon la revendication 2, **caractérisé en ce que** l'unité constructive peut être fixée à l'aide d'au moins un collier (11) entourant l'enveloppe (3) au couvercle (10) de l'espace de stockage (1).

4. Dispositif selon une des revendications 1 à 3, **caractérisé en ce que** sur l'enveloppe (3) du convoyeur à vis (2) sont prévus deux détecteurs de niveau (14a, 14b), un premier détecteur de niveau (14a) pouvant être disposé dans la région d'une paroi de l'espace de stockage et un deuxième détecteur de niveau (14b) étant disposé dans la région du plateau de centrifugation (8).
